# EUROPEAN PATENT SPECIFICATION

(11) **EP 0 455 842 B1**
(45) Date of publication and mention of the grant of the patent: **03.07.1996**
(21) Application number: 90108518.3
(22) Date of filing: 07.05.1990
(51) Int. Cl.: G01S 13/95, G01S 13/28

(54) **Scatterometer**
Streustrahlungsmessgerät
Dispositif pour mesurer la dispersion d'ondes

(43) Date of publication of application: 13.11.1991
(73) Proprietor: DORNIER GMBH, D-88004 Friedrichshafen (DE); ESA, EUROPEAN SPACE AGENCY, F-75738 Paris Cédex 15 (FR)
(72) Inventor: Schulte, Reiner, Dr., D-7758 Meersburg (DE); Weber, Jürgen Dr., D-7777 Salem-Beuren (DE); Ménard, Yvon, NL-2241 SZ Wassenaar (NL)
(74) Representative: Landsmann, Ralf, Dipl.-Ing.

(56) References cited:
- IEEE TRANSACTIONS ON GEOSCIENCE & REMOTE SENSING, vol. 26, no. 5, September 1988, pages 532-539, New York, US; N.S. PILLAI et al.: "A spaceborne LFM scatterometer for ocean surface wind vector measurement - a time domain approach"
- IEEE TRANSACTIONS ON GEOSCIENCE AND REMOTE SENSING, vol. GE-24, no. 3, May 1986, pages 426-437, New York, US; C.-Y. CHI et al.: "Radar backscatter measurement accuracies using digital doppler processors in spaceborne scatterometers
- IEEE TRANSACTIONS ON GEOSIENCE & REMOTE SENSING, vol. 6, no. 26, November 1988, pages 869-878, New York, US; D.G. LONG et al.: "The design of an onboard digital doppler processor for a spaceborne scatterometer"

## Description

The invention concerns a Wind speed scatterometer as defined in claim 1. The purpose of a wind scatterometer is the determination of the wind speed over the ocean by measurement of the radar backscattering of its surface. The radar backscattering of the water surface is related to the wind stress on this surface by the scattering properties of induced waves. For vertical polarized beams in the C-band an empirical model (CMOD1) for the dependency of the normalized backscattering area of the water surface from wind speed, wind direction and incidence angle of the observation has been established by A.E.Long, "Towards a C-Band Radar Sea Echo Model For the ERS1 Scatterometer" Dec. 1985, Les Arcs, ESTEC-Meeting. With the aid of this model an estimate for the wind vector can be calculated from measurements of the backscattering coefficient of an observation cell observed out of two or more different directions. To remove ambiguities in the wind direction determination the use of at least three different measurement directions is highly desirable. The two most popular instrument types are the doppler resolution scatterometer and the short pulse scatterometer (like the scatterometer on board of the ERS1 satellite /ERS1 Documentation).

In the doppler type scatterometer a relative long pulse (duration in the milli second range) is transmitted. The received echoes from cells across the measurement swath can be separated because they are shifted in frequency due to the doppler spread across the swath. A power spectrum analysis of the received signal leads to resolution cells with boundaries in across track direction given by Iso Doppler lines. The possible antenna look angles are therefore restricted to directions in which over the entire observation swath the Iso Doppler lines cut the antenna look direction in almost perpendicular angle. For too small cut angles the spatial resolution will be insufficient (even if the frequency spectrum is analyzed with arbitrary high resolution). Especially in the look direction perpendicular to the satellites track no resolution is possible. The main disadvantage of the concept therefor is the restriction of possible look angles and swath widths while the main advantage is given by the possibility to use low peak power transmitters which allow a solid state realization of the instrument including its power amplifier.

The second instrument type uses short pulses (70-130µs duration) and operates in the time domain to separate the signals from different across track locations. Here resolution is determined by the pulse width and the antenna look angle is not restricted. However for beam directions not perpendicular to the flight track a compensation of the doppler spread is required. In general this doppler compensation is depending on the orbital position of the satellite. For the required spatial and radiometric resolutions (50km; Kₚₑ=8% at 800km across track distance) a peak power in the kW range is necessary which can only be generated by TWT high power amplifiers. There is further known from IEEE Transactions on Gesscience and Remote Sensing Vol.26, N°5, Sept '88, pages 532 - 539 a spaceborne LFM wind scatterometer using pulse compression and doppler shift correction.

It is an object of the invention to provide a scatterometer which allows the utilisation of a power amplifier with no high output.

According to the invention the Doppler Scatterometer uses a linear frequency modulated (LFM) pulse and an on board data compression as set out in claim 1. Prefered embodiments of the invention are subjects of the dependent claims.

The invention will be described by way of example with reference to the accompanying drawings, in which
Fig. 1 shows the principle of the RF part of the instrument
Fig. 2 a scatterometer swath layout and
Fig. 3 iso frequency lines of discriminator signal.

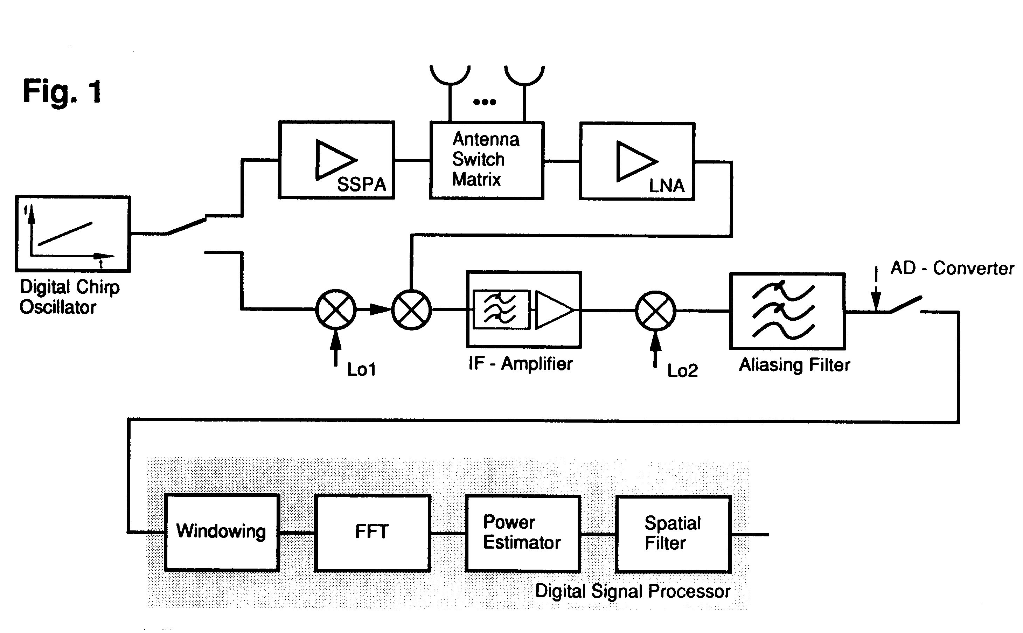

Fig. 1 shows the linear frequency modulation scatterometer principle. The instrument comprises a digital chirp oscillator which performs the linear frequency modulation, a solid state power amplifier (SSPA) , an antenna switch matrix for distribution of the energy to the individual antennas, a preamplifier (LNA), two mixers (Lo1 = local oscillator signal), an intermediate frequency amplifier, a third mixer, an anti-aliasing filter (low-pass filter) and a digital signal processor with a program performing windowing, fast fourier transformation (FFT), power estimation and spatial filtering.

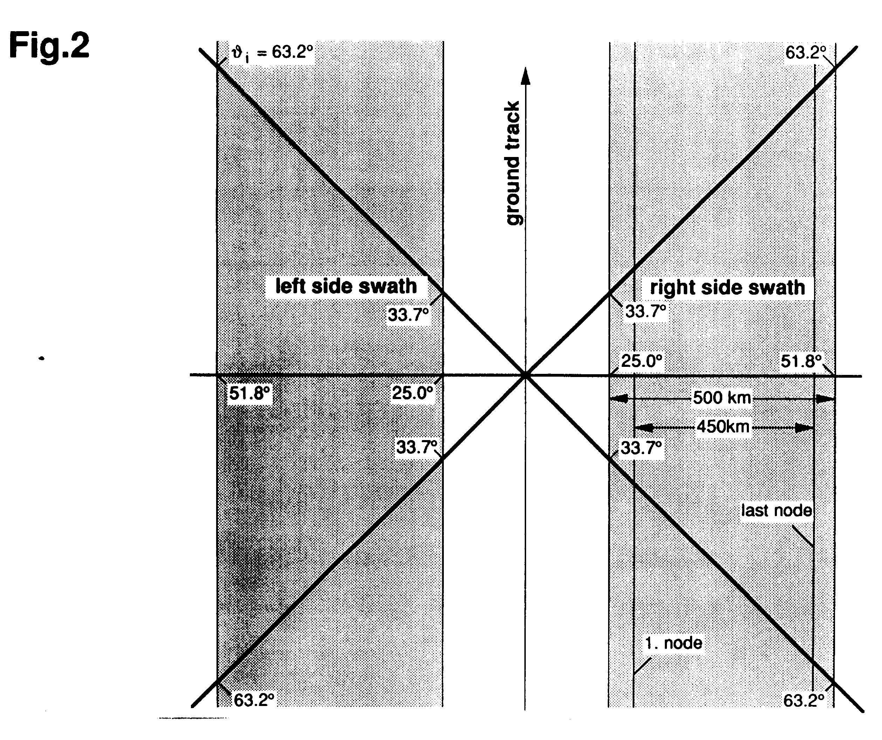

The transmitted pulse has a duration of approximately 10 ms. The received echo is dechirped with a (delayed) image of the transmitted signal,.and then passed through a low pass filter. This discriminator signal is input to the frequency domain processing (power spectrum estimation). The instrument in this example uses 6 antennas operated in turn looking into the directions indicated in Fig.2. From each point of a double sided swath of 500km width (corresponding to incidence angles ranging from 25 deg to 63 deg) a signal is collected from three different azimuth look angles (45; 90; 135deg). The look directions are identical to those selected for the ERS1 short pulse scatterometer. The modulation rate is chosen in the order of 10 lettz/ms to 50 lettz/ms depending on antenna look direction.

Fig.2 shows a scatterometer swath layout.

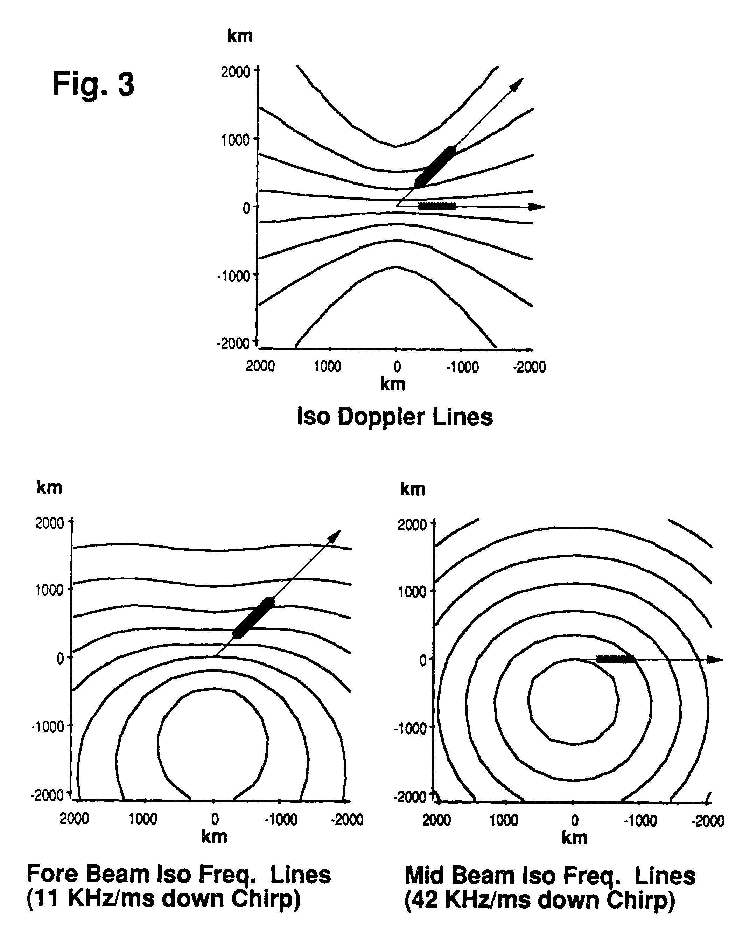

In Fig.3 the iso frequency lines of the discriminator signal for no chirp (doppler scatterometer) 11 KHz down chirp (used for fore beam) and 42KHz down chirp (used for mid beam) are shown. The arrows in this diagram point in the look directions 45deg and 90deg the two principal cases for the above mentioned antenna constellation. The shaded parts indicate the swath regions. It can be seen that for the zero sweep case (doppler scatterometer) only the 45deg beam allows a processing in the frequency domain. Detailed calculation shows that even in this case for 3.7m antenna length the resolution is not compliant with a 50 km resolution cell at the far swath points. The introduction of the chirp modulation of the transmitted pulse changes the iso frequency lines of the discriminator signal in a way that sufficient spatial resolution can be obtained in all beams by frequency domain processing.

The design requirements for a scatterometer based on the above principle can be i. e.:
- double sided swath of 500 km width
- 50 km * 50 km resolution cell
- radiometric resolution in the order of 9% (far swath 4m/s cross wind)

A list of important system parameters is given below.

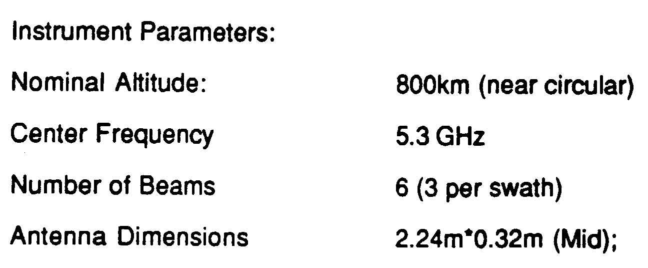

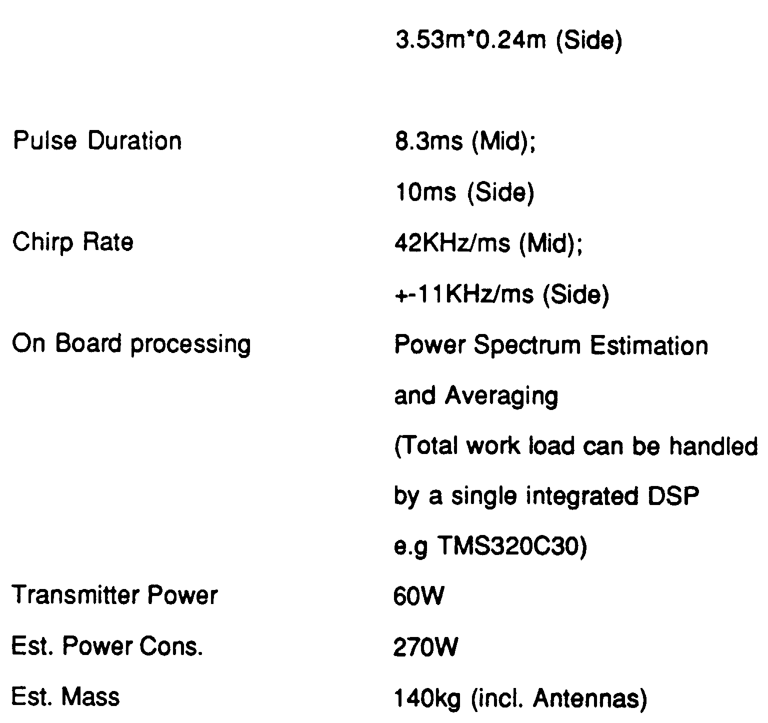

The scatterometer principle of the invention allows the construction of instruments compatible with short pulse scatterometers of the type to be used on the ERS1 while maintaining the advantages of the Doppler Scatterometer. Furthermore the principle allows an increased resolution with only slight modifications to the instrument. For example by extension of all antennas to a length of 4m and changing of the spatial filter function the instrument can be used with 25km resolution and a radiometric resolution in the order of 14% (worst case).

## Claims

1. Scatterometer for use in a satellite, comprising
- a transmitter for transmitting linear frequency modulated pulses with a relatively long duration, whereby the linear frequency modulation is generated by a digital chirp generator
- multiple antennas, looking in different directions
- a receiver comprising analog dechirping means for dechirping the received, signal by using the signal generated by said digital chirp generator
- an A/D-Converter for analog to digital converting the dechirped signal
- an on board digital data compressor for processing the dechirped and digitised signal, comprising windowing means, followed by fast fourier transforming (FFT) means, power estimating means and a spatial low pass filter.

2. Scatterometer according to claim 1, characterised by 6 antennas illuminating ground swaths orientated at 45°, 90°, 135°.

3. Scatterometer according to claim 1 or 2, characterised by a modulation rate in the order of 10 kHz/ms to 50 kHz/ms depending on antenna look direction.

## Patentansprüche

1. Scatterometer zum Einsatz in einem Satelliten, umfassend
- einen Sender zum Senden linear frequenzmodulierter Pulse mit relativ langer Dauer, wobei die lineare Frequenzmodulation von einem digitalen Chirp-Generator erzeugt wird,
- mehrere Antennen, die in verschiedene Richtungen gerichtet sind,
- einen Empfänger, enthaltend analoge De-Chirping-Mittel zum Dechirping des empfangenen Signals, durch Verwendung des vom besagten digitalen Chirp-Generator erzeugten Signals,
- einen A/D-Wandler zur Analog-zu-digital-Wandlung des De-Chirp-Signals,
- ein bordseitiger Daten-Kompressor zur Verarbeitung des digitalisierten De-Chirp-Signals, umfassend Mittel zur Mulitplikation mit einer Fensterfunktion, gefolgt von Mitteln zur Durchführung einer schnellen Fourier-Transformation (FFT), Mittel zur Leistungsberechnung und ein räumliches Tiefpaßfilter.

2. Scatterometer nach Anspruch 1, **gekennzeichnet** durch sechs Antennen, die in 45°, 90°, 135° gerichtete Oberflächenstreifen beleuchten.

3. Scatterometer nach Anspruch 1 oder 2, **gekennzeichnet** durch eine Modulations-Rate in der Größenordnung von 10 kHz/ms bis 50 kHz/ms, abhängig von der Antennenblickrichtung.

## Revendications

1. Diffusiomètre à utiliser dans un satellite,
comprenant
- un émetteur pour émettre des impulsions à modulation linéaire de fréquence, d'une durée relativement longue, la modulation linéaire de fréquence étant produite par un générateur numérique à impulsions modulées en fréquence
- pulsieurs antennes orientées dans des directions différentes
- un récepteur comprenant un moyen analogique de démodulation d'impulsions modulées en fréquence pour soumettre le signal reçu à une démodulation d'impulsions modulées en fréquence à l'aide du signal produit par ledit générateur numérique à impulsions modulées en fréquence
- un convertisseur A-N pour soumettre à une conversion analogique-numérique le signal soumis à une modulation d'impulsions modulées en fréquence
- un compresseur de données numériques embarqué pour traiter le signal soumis à une démodulation d'impulsions modulées en fréquence et numérisé, comportant un moyen de multifenêtrage, suivi par un moyen pour réaliser une transformation de Fourier rapide (TFR), un moyen d'estimation de puissance et un filtre passebas spatial.

2. Diffusiomètre selon la revendication 1, caractérisé par 6 antennes orientées à 45°, 90°, 135° pour couvrir des bandes de terrain balayées.

3. Diffusiomètre selon la revendication 1 ou 2, caractérisé par une rapidité de modulation de l'ordre de 10 kHz/ms à 50 kHz/ms selon l'orientation des antennes.
